# EUROPÄISCHE PATENTSCHRIFT

(11) **EP 1 358 059 B1**
(45) Veröffentlichungstag und Bekanntmachung des Hinweises auf die Patenterteilung: **16.03.2011**
(21) Anmeldenummer: 02710821.6
(22) Anmeldetag: 30.01.2002
(51) Int. Cl.: B29C 67/00, B22F 3/105, B29B 17/00

(54) **VORRICHTUNG ZUM HERSTELLEN EINES DREIDIMENSIONALEN OBJEKTS ENTHALTEND EINE VORRICHTUNG ZUR BEHANDLUNG VON PULVER UND VERFAHREN ZUM HERSTELLEN EINES DREIDIMENSIONALEN OBJEKTS**
DEVICE FOR PRODUCING A THREE-DIMENSIONAL OBJECT COMPRISING A DEVICE FOR TREATING POWDER AND METHOD FOR THE PRODUCTION THEREOF
DISPOSITIF DE REALISATION D'UN OBJET TRIDIMENSIONNEL COMPRENANT UN DISPOSITIF DE TRAITEMENT DE POUDRE ET PROCEDE DE REALISATION D'UN OBJET TRIDIMENSIONNEL

(30) Priorität: 07.02.2001 DE 10105504
(43) Veröffentlichungstag der Anmeldung: 05.11.2003
(73) Patentinhaber: EOS GmbH Electro Optical Systems, 82152 Krailling (DE)
(72) Erfinder: LEUTERER, Martin, 82140 Olching (DE); HALDER, Thomas, 81371 München (DE)
(74) Vertreter: Hofer, Dorothea
(86) Internationale Anmeldenummer: PCT/EP2002/000960
(87) Internationale Veröffentlichungsnummer: WO 2002/062560

(56) Entgegenhaltungen:
- WO-A-01/26846
- DE-A- 19 530 296
- US-A- 3 995 771
- US-A- 6 046 426

## Beschreibung

Die Erfindung betrifft eine Vorrichtung und ein Verfahren zum Herstellen eines dreidimensionalen Objekts.

Dokument DE 195 30 295 offenbart eine Vorrichtung gemäß dem Oberbegriff des Anspruchs 1 und ein Verfahren gemäß dem Oberbegriff des Anspruchs 12. Es sind Verfahren zum Herstellen dreidimensionaler Objekte wie z.B. das selektive Lasersintern oder das 3D-Printing bekannt, bei denen das dreidimensionales Objekt schichtweise durch Verfestigen eines pulverförmigen Materials gebildet wird. Bei der Technik des selektiven Lasersinterns erfolgt die Verfestigung mittels eines auf die Pulverschicht auftreffenden Laserstrahls, beim 3D-Printing wird ein Binder bzw. Klebstoff an den zu verfestigenden Stellen der Pulverschicht aufgebracht. Das nicht verfestigte Pulver wird üblicherweise als Altpulver wiederverwendet und auch mit Neupulver gemischt. Insbesondere im Fall des selektiven Lasersinterns kann es bei der Rückführung des Altpulvers in den werkstoffkreislauf zu einer Schichtung des

Werkstoffes aus unterschiedlichen Sinterprozessen in einem für das Altpulver vorgesehenen Altpulverbehälter kommen. Die unterschiedlichen Schichten können sich in den Pulvereigenschaften unterscheiden, was zu Einflüssen auf den Sinterprozess und der Bauteilqualität-führt. Außerdem sind je nach verwendetem Pulver die Eigenschaften des Altpulvers nicht identisch zu denen des Neupulvers, z.B. kann bei Verwendung von thermoplastischen Pulvern eine thermische Alterung vorkommen. Ferner kann es zu einem Stocken des Ausflusses des Pulvers aus dem Pulverbehälter kommen.

Aus der EP 0 289 116 A1 ist eine Vorrichtung und ein Verfahren zum Herstellen eines dreidimensionalen Objekts bekannt, bei dem das Objekt schichtweise durch Schmelzen eines Pulvermaterials hergestellt wird. Die übereinanderliegenden Pulverschichten werden mittels eines fluidisierten Pulverbetts erzeugt, wobei das Pulver in dem Bauraum, in dem das Objekt gebildet wird, aufgewirbelt wird, so daß sich jeweils eine neue Schicht Pulver über eine bereits durch Schmelzen verfestigte Schicht legt.

Es ist Aufgabe der Erfindung, eine Vorrichtung und ein Verfahren zum Herstellen eines dreidimensionalen Objekts bereitzustellen, mit der bzw. mit dem die oben beschriebenen Probleme gelöst werden und die Bauteilqualität sowie die Effizienz des Bauprozesses verbessert werden.

Die Aufgabe wird gelöst durch eine Vorrichtung gemäß Patentanspruch 1 und ein Verfahren nach Patentanspruch 12. Weiterbildungen der Erfindung sind in den Unteransprüchen angegeben.

Weitere Merkmale und Zweckmäßigkeiten der Erfindung ergeben sich aus der Beschreibung von Ausführungsbeispielen anhand der Figuren.

Von den Figuren zeigen:
- FIG. 1: eine schematische Darstellung einer Laser- sintereinrichtung;
- Fig. 2: eine schematische Querschnittsansicht der erfindungsgemäßen Vorrichtung zur Behand- lung von Pulver nach einer ersten Ausfüh- rungsform; und
- Fig. 3: eine schematische Ansicht einer Abwandlung der erfindungsgemäßen Vorrichtung von Fig. 2.
- Fig. 4: eine Schnittansicht einer erfindungsgemä- ßen Vorrichtung zur Behandlung von Pulver nach einer zweiten Ausführungsform; und
- FIG. 5: eine Seitenansicht der Vorrichtung von Fig. 4

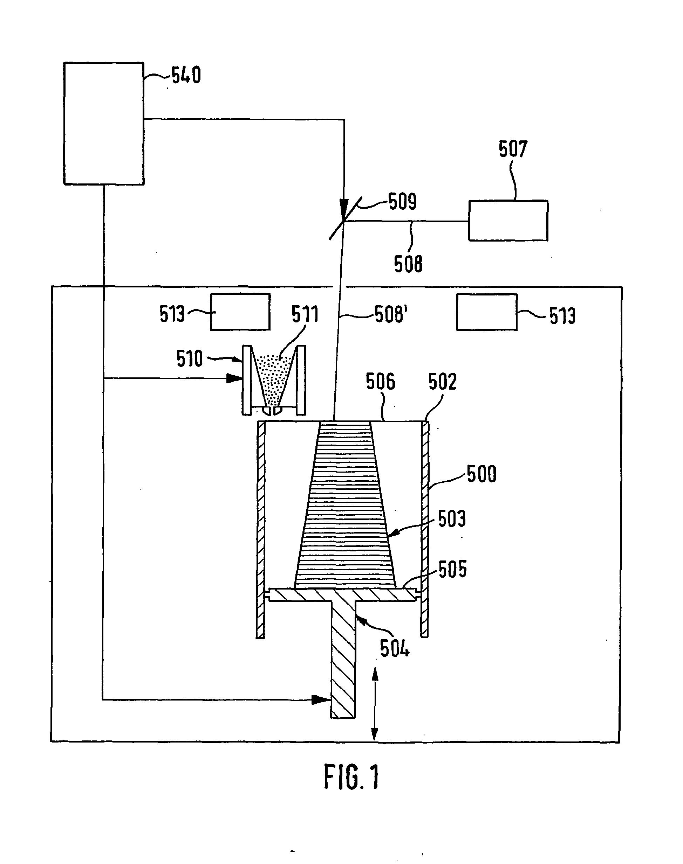

Wie insbesondere aus Fig. 1 ersichtlich ist, weist eine Lasersintereinrichtung einen nach oben offenen Behälter bzw. Baubehälter 500 mit einem oberen Rand 502 auf. Der Querschnitt des Behälters 500 ist größer als die größte Querschnittsfläche eines herzustellenden Objekts 503. In dem Behälter 500 ist ein Träger 504 zum Tragen des zu bildenden Objekts mit einer im wesentlichen ebenen, dem oberen Rand 502 zugewandten Oberfläche 505 vorgesehen. Der Träger 504 ist mittels eines in Fig. 1 schematisch angedeuteten Antriebes in dem Behälter 500 in vertikaler Richtung auf- und abbewegbar. Der obere Rand 502 des Behälters 500 definiert eine Arbeitsebene 506.

Oberhalb der Arbeitsebene 506 ist eine Bestrahlungseinrichtung in Form eines Lasers 507 angeordnet, die einen gerichteten Lichtstrahl 508 abgibt. Es ist eine Ablenkeinrichtung 509, beispielsweise als ein System von Galvanometerspiegeln, vorgesehen, über die der Lichtstrahl 508 als abgelenkter Strahl 508' an jede gewünschte Stelle der Arbeitsebene 506 ablenkbar ist.

Ferner ist ein Beschichter 510 zum Aufbringen einer Schicht eines zu verfestigenden Pulvermaterials 511 auf die Trägeroberfläche 505 oder eine zuletzt verfestigte Schicht vorgesehen. Der Beschichter 510 ist mittels eines schematisch angedeuteten Antriebs von einer ersten Endstellung auf einer Seite des Behälters 500 in eine zweite Endstellung auf der gegenüberliegenden Seite des Behälters 500 über der Arbeitsebene 506 hin- und herbewegbar. Zum Befüllen des Beschichters 511 ist oberhalb der Endpositionen des Beschichters 510 jeweils ein Befüllbehälter 513 zum Befüllen des Beschichters mit Pulvermaterial vorgesehen.

Es ist ferner eine Steuereinrichtung 540 vorgesehen, durch die der Antrieb zur Einstellung der Position des Trägers 504, der Antrieb zum Verfahren des Beschichters 510 und der Antrieb zum Verstellen der Ablenkeinrichtung koordiniert oder unabhängig voneinander steuerbar sind.

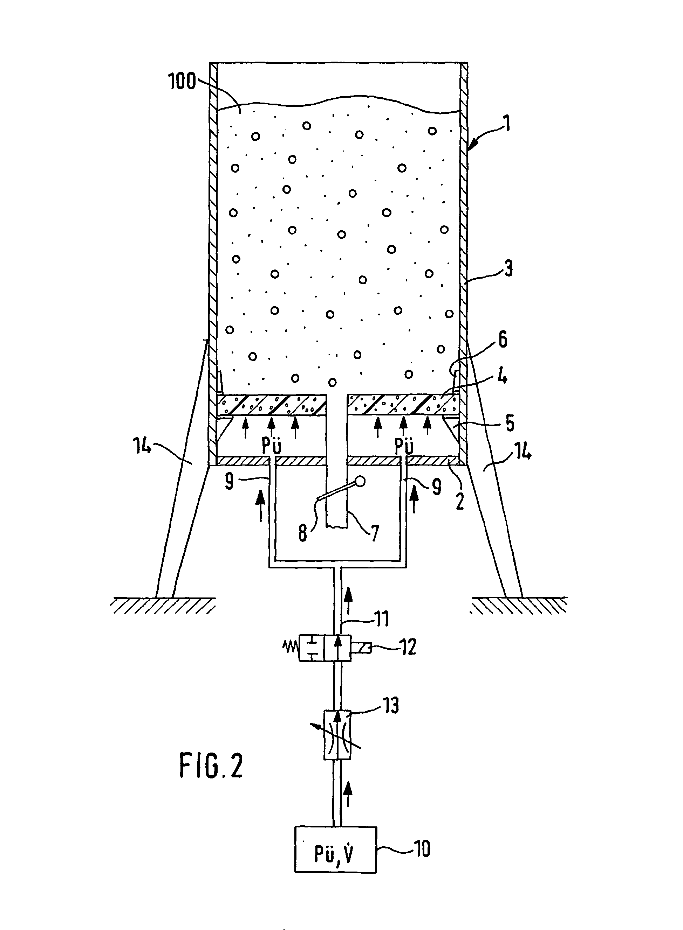

Wie aus Fig. 2 ersichtlich ist, weist die erfindungsgemäße Vorrichtung zur Behandlung von Pulver für eine Lasersintereinrichtung in einer ersten Ausführungsform einen sich außerhalb der eigentlichen Lasersintereinrichtung befindlichen Behälter 1 zur Aufnahme des Altpulvers und/oder einer Mischung von Alt- und Neupulver auf. Der Behälter 1 besitzt einen Boden 2 und eine den Boden umgebende und sich vertikal erstreckende Wand 3. Der Behälter 1 ist an seiner dem Boden 2 gegenüberliegenden Seite offen zum Ermöglichen des Einfüllens von Pulver.

In einem Abstand vom Boden 2 ist eine im Wesentlichen parallel zum Boden 2 angeordnete poröse Platte 4 vorgesehen, die so bemessen ist, dass sie sich über die gesamte Querschnittsfläche des Behälterinnenraums erstreckt. Die poröse Platte 4 sitzt auf einem an der Behälterwand vorgesehenen beispielsweise ringförmig verlaufenden Vorsprung 5 auf und ist an ihrer dem Boden abgewandten Seite über eine Halterung 6 fixiert. Die poröse Platte 4 ist bevorzugt aus einer Kunststoffsinterplatte gefertigt und damit auf Grund der Porosität des gesinterten Materials gasdurchlässig. Der Boden 2 und die poröse Platte 4 weisen koaxiale Öffnungen auf, durch die ein Pulveraustragsrohr 7 nach unten herausgeführt ist. An dem Pulveraustragsrohr 7 ist eine Verschlussklappe 8 angeordnet.

Der Boden 2 des Behälters 1 weist wenigstens eine, bevorzugt aber eine Mehrzahl von Zuführungsleitungen 9 für Druckluft auf. Die Zuführungen 9 sind mit einer Druckluftquelle 10 über eine gemeinsame Leitung 11 verbunden. Zum Steuern der Zufuhr der Druckluft insbesondere des Drucks P und des Volumenstroms V ist in der Leitung 11 ein Mehrwegeventil 12 und ein verstellbares Drosselventil 13 angeordnet.

Der ganze Behälter 1 wird von Standfüßen 14 getragen.

Im Betrieb wird Altpulver 100, welches als nicht gesintertes Pulver von Sinterprozessen beim selektiven Lasersintern in einer Lasersintereinrichtung übrig bleibt, und/oder eine Mischung von Alt- und Neupulver in den Behälter 1 gegeben, bis dieser ausreichend gefüllt ist. Das Pulver 100 befindet sich in dem Bereich oberhalb der porösen Platte 4. Anschließend wird Druckluft über die Druckluftquelle 10 und die Leitungen 11 und 9 in die durch den Boden 2, die Seitenwand 3 und die poröse Platte 4 des Behälters 1 gebildete Kammer zugeführt und der Druck und der Volumenstrom in gewünschter Weise über die Ventile gesteuert. Die poröse Platte 4 ist für die Druckluft durchlässig, so dass diese in das Pulver 100 gelangt und dieses durchmischt. Durch das flächige Einblasen der Luft durch die poröse Platte 4 wird das Pulver 100 fluidisiert. Bei einer hohen Luftmenge wird eine vollständige Homogenisierung und Vermischung des Altpulvers durch turbulente Verwirbelung des Pulvers erreicht.

Bei einem geringeren Luftstrom wird das Pulver lediglich verdünnt, ohne zu verwirbeln. In diesem Zustand kann sich kein Schüttkegel über dem Pulveraustragsrohr 7 ausbilden und ein Stocken des Pulverflusses wird unterbunden. Somit ist es zweckmäßig zuerst mit einem hohen Luftstrom zu arbeiten, um eine vollständige Durchmischung zu erreichen und anschließend beim Austrag des Pulvers einen geringen Luftstrom einzustellen, so dass das Pulver gleichmäßig ausgetragen wird.

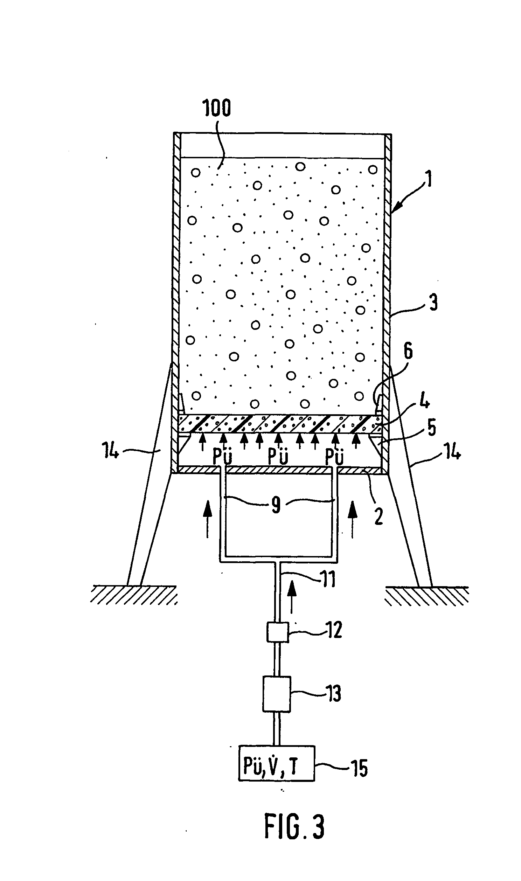

In einer in Fig. 3 gezeigten Abwandlung der Vorrichtung ist kein Austragsrohr 7 vorgesehen. Ferner ist eine Vorrichtung 15 zur Zuführung eines Kühlmediums unter Überdruck z. B. ebenfalls Druckluft einer bestimmten Temperatur vorgesehen, die zur gesteuerten und/oder geregelten Abkühlung des in dem Behälter 1 befindlichen Pulvermaterials 100 dient. In einer bevorzugten Ausbildung beinhaltet die Vorrichtung 15 einen Temperaturregler, mit dem das Kühlmedium auf eine bestimmte Temperatur eingestellt werden kann.

Im Betrieb wird Pulver 100 , in den Behälter 1 gegeben. Durch gesteuerte Zufuhr des Kühlmediums wird das Pulver 100 homogenisiert und gegebenenfalls gesteuert abgekühlt. Das Pulver wird anschließend durch beispielsweise Kippen des Behälters herausgeschüttet und der Lasersintereinrichtung für einen weiteren Bauprozess wieder zugeführt.

Das zugeführte gasförmige Medium ist nicht auf Druckluft be-, schränkt. Es kann auch ein anderes Gas verwendet werden, beispielsweise um eine Oberflächenbehandlung des Altpulvers zu erzielen. Ferner kann das Pulver in dem Behälter über das zugeführte Medium auch beispielsweise befeuchtet werden oder einer chemischen Behandlung unterzogen werden. Die Vorrichtung ist nicht auf die Behandlung von Altpulver beschränkt. Es kann auch Altpulver und Neupulver gemischt einer Behandlung unterzogen werden. Je nach Zweckmäßigkeit kann auch beim dem Behälter 1 der in Fig. 3 gezeichneten abgewandelten Ausführungsform ein Austragsrohr vorgesehen sein.

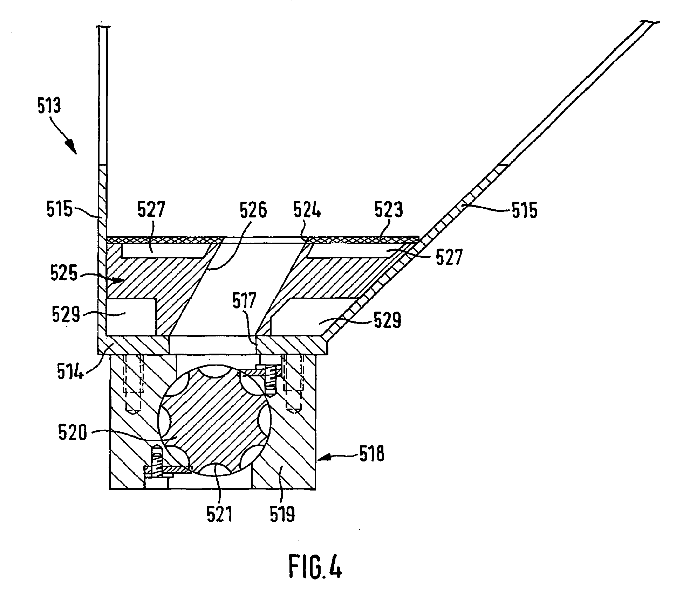

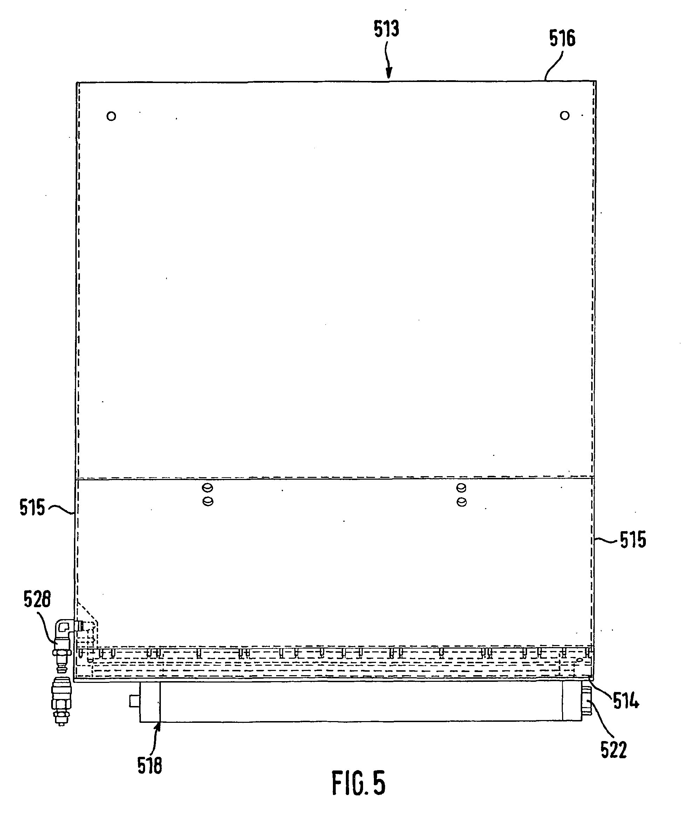

In einer weiteren, in den Figuren 4 und 5 gezeigten Ausführungsform ist die erfindungsgemäße Vorrichtung zur Behandlung von Pulver innerhalb der Lasersintereinrichtung vorgesehen. Hierzu weist weingstens einer oder auch beide der in Fig. 1 schematisch dargestellten Befüllbehälter 513 eine Einrichtung zum Fluidisieren des in dem Befüllbehälter befindlichen Pulvers auf. Der Befüllbehälter 513 ist als ein sich über die gesamte Baufeldbreite erstreckender Behälter ausgebildet, der einen Boden 514 und sich von diesem erstreckende Seitenwände 515 aufweist. Eine der Seitenwände verläuft, wie insbesondere aus Fig. 4 ersichtlich ist schräg, so daß der Befüllbehälter an seinem Boden einen geringeren Querschnitt hat als an seinem oberen offenen Ende 516. Am Boden des Befüllbehälters ist eine sich im wesentlichen über die Baufeldbreite erstreckende Austrittsöffnung 517 vorgesehen. An der dem Behälter abgewandten Seite des Bodens 514 unterhalb der Austrittsöffnung 517 ist eine Dosiereinrichtung 518 vorgesehen, die eine in einem Gehäuse 519 angebrachte Dosierwalze 520 umfaßt. Die Dosierwalze 520 weist eine Länge auf, die der Längen des Beschichters 511 entspricht. Die Dosierwalze 520 ist so ausgebildet, daß sie an ihrer Oberfläche eine Mehrzahl von symmetrisch angeordneten Kerben 521 beinhaltet, die in axialer Richtung verlaufen und die ein definiertes Volumen an Pulver aufnehmen können. Die Dosierwalze 520 ist über einen in Fig. 5 dargestellten, mit einem Motor verbundenen Antrieb 522 drehbar.

Wie insbesondere aus Fig. 4 ersichtlich ist, ist im Inneren des Befüllbehälters 513 in einem Abstand von seinem Boden 514 eine poröse Wand bzw. Lage 523 vorgesehen, die entsprechend der Austrittsöffnung 517 eine Öffnung 524 aufweist. Die poröse, gasdurchlässige Lage 523 ist z.B. aus einem gewalzten Drahtgeflecht gebildet. Die poröse Lage 523 wird über ein sich im wesentlichen über die gesamte Baufeldbreite erstreckenden Teil 525 gehalten, welches auf dem Boden 514 ruht. Das Teil 525 besitzt einen Spalt 526, dessen breite der Austrittsöffnung 517 in dem Boden 514 des Befüllbehälters entspricht und der über dieser Austrittsöffnung liegt. Die Öffnung 524 der porösen Lage 523 korrespondiert mit dem Spalt 526. Das Teil 525 ist ferner so gebildet, daß es sich unterhalb der porösen Lage erstreckende Ausnehmungen 527 aufweist, die Kammern bilden und die mit einer Zuführungseinrichtung 528 für ein gasförmiges Medium, beispielsweise für Druckluft, in Verbindung stehen. Die Ausnehmungen 527 bilden somit die Druckkammern für die Fluidisierung. Weitere, dem Boden 514 zugewandte Ausnehmungen 529 des Teils 525 dienen der Unterbringung von Befestigungsmitteln, wie z.B. Schrauben für die Dosiereinrichtung 518.

Im Betrieb wird der Befüllbehälter mit Pulver gefüllt. Während des gesamten Bauprozesses oder auch in bestimmten Abständen wird den durch die Ausnehmungen 527 gebildeten Kammern Druckluft oder ein anderes gewünschtes fluides Medium zugeführt. Dadurch wird das in dem Befüllbehälter 513 befindliche Pulver nahe des Behälterbodens 514 fluidisiert und es kommt nicht zu einem Pulverstau an der Austrittsöffnung 517. Die umfangsseitigen Kerben 521 der Dosierwalze 519 werden somit gleichmäßig mit Pulver befüllt. Die Befüllung des Beschichters 511 erfolgt jeweils in der Endstellung unterhalb der Dosierwalze. Durch Drehung der Dosierwalze wird der Pulverinhalt einer oder mehrerer Kerben in den Beschichter abgegeben. Die Fluidisierung des Pulvers in dem Befüllbehälter ermöglicht eine sehr genaue Dosierung, was eine genaue Schichtdicke und damit eine verbesserte Bauteilqualität zur Folge hat.

Bei dem erfindungsgemäßen Verfahren zum Herstellen des dreidimensionalen Objekts mittels Lasersintern wird das Pulver vor dem Bauprozeß in dem in den Figuren 2 und 3 gezeigten Behälter fluidisiert und somit homogenisiert.Anschließend wird es in die Lasersintereinrichtung eingeführt und für den Bauprozeß, der in bekannter Weise abläuft, verwendet. Anstelle oder zusätzlich zu der Fluidisierung vor dem gesamten Bauprozeß wird das Pulver in der Lasersintereinrichtung in dem Befüllbehälter fluidisiert.

Die Erfindung ist nicht auf das Lasersintern beschränkt sondern ebenfalls anwendbar für andere generative Verfahren zum Herstellen von dreidimensionalen Objekten, bei denen Pulver verwendet wird.

## Patentansprüche

1. Vorrichtung zum Herstellen eines dreidimensionalen Objekts mit
einem Träger (505), auf dem das Objekt aufgebaut wird,
einem Beschichter (510) zum Aufbringen von Schichten eines verfestigbaren Pulvermaterials auf den Träger oder eine zuvor verfestigte Schicht, wobei der Beschichter mit dem aufzubringenden Pulver befüllbar ist,
einer Verfestigungseinrichtung (540) zum Verfestigen des Pulvermaterials an dem Objekt in der jeweiligen Schicht entsprechenden Stellen, **gekennzeichnet durch**
eine Vorrichtung (1; 513) zur Fluidisierung des Pulvers vor dem Verfestigen,
mit einem Vorratsbehälter (1; 513) für das Pulver mit einem Boden (2; 514) und einer Seitenwand (3; 515), wobei in dem Behälter (1; 513) eine Kammer vorgesehen ist, die in wenigstens einem Bereich zum Behälterinneren hin eine für ein fluides Medium durchlässige Begrenzung (4; 523) aufweist, und
mit einer Vorrichtung (9; 528) zum Zuführen eines fluiden Mediums in die Kammer.

2. Vorrichtung nach Anspruch 1, **dadurch gekennzeichnet, dass** die Begrenzung als eine in einem Abstand vom Boden (2) sich im Wesentlichen über den Querschnitt des Behälterinneren erstreckende Lage (4) aus einem für das fluide Medium durchlässigem Material gebildet ist.

3. Vorrichtung nach Anspruch 1 oder 2, **dadurch gekennzeichnet, dass** die Begrenzung (4) als gasdurchlässige Platte, bevorzugt aus gesintertem Kunststoffmaterial, ausgebildet ist.

4. Vorrichtung nach Anspruch 1 oder 2, **dadurch gekennzeichnet, dass** die Begrenzung (523) aus einem gewalzten Drahtgewebe gebildet ist.

5. Vorrichtung nach einem der Ansprüche 1 bis 4, **dadurch gekennzeichnet, dass** die Vorrichtung zum Zuführen eines fluiden Mediums eine Vorrichtung zum Zuführen eines Gases ist.

6. Vorrichtung nach einem der Ansprüche 1 bis 5, **dadurch gekennzeichnet, dass** eine Einrichtung zum Steuern und/oder Regeln der Temperatur und/oder des Drucks und/oder des Volumenstroms des fluiden Mediums vorgesehen ist.

7. Vorrichtung nach einem der Ansprüche 1 bis 6, **dadurch gekennzeichnet, dass** ein sich vertikal nach unten erstreckender Auslass (7; 526, 517) für das Pulver vorgesehen ist.

8. Vorrichtung nach Anspruch 7, **dadurch gekennzeichnet, daß** die Vorrichtung zur Fluidisierung als ein sich außerhalb der Vorrichtung zum Herstellen des Objekts befindlicher Vorratsbehälter (1) vorgesehen ist.

9. Vorrichtung nach Anspruch 7 oder 8 **dadurch gekennzeichnet, daß** die Vorrichtung zum Fluidisieren innerhalb der Vorrichtung zum Herstellen des Objekts vorgesehen ist und als Befüllbehälter (513) ausgebildet ist, der dem Beschichter (510) vorgeschaltet ist.

10. Vorrichtung nach Anspruch 9, **dadurch gekennzeichnet, daß** der Befüllbehälter (513) eine Austrittsöffnung (517) aufweist, der eine Dosiereinrichtung (518) nachgeschaltet ist.

11. Vorrichtung nach Anspruch 9, **dadurch gekennzeichnet, daß** die Vorrichtung zum Fluidisieren eine in einem Abstand von dem Boden des Befüllbehälters angeordnete gasdurchlässige Lage (523) umfaßt.

12. Verfahren zum Herstellen eines dreidimensionalen Objekts mittels eines generativen Fertigungsverfahrens und mittels einer Vorrichtung nach einem der Ansprüche 1 bis 11, bei dem das Objekt durch aufeinanderfolgendes Aufbringen von Schichten eines pulverförmigen Materials durch einen mit dem Pulver befüllten Beschichter und Verfestigen der Schichten an dem Querschnitt des Objekts entsprechenden Stellen aufgebaut wird, **dadurch gekennzeichnet, daß** das Pulver vor dem Verfestigen in einem Vorratsbehälter (1; 513) fluidisiert wird.

13. Verfahren nach Anspruch 12, **dadurch gekennzeichnet, daß** das Pulver vor dem gesamten Bauprozeß fluidisiert wird.

14. Verfahren nach Anspruch 12 oder 13, **dadurch gekennzeichnet, daß** das Pulver vor dem Aufbringen einer Schicht fluidisiert wird.

15. Verfahren nach einem der Ansprüche 12 bis 14, **dadurch gekennzeichnet, daß** die Fluidisierung durch Zufuhr eines fluiden Mediums, vorzugsweise eines Gases, in den Vorratsbehälter (1; 513) erfolgt.

16. Verfahren nach Anspruch 15, **dadurch gekennzeichnet, daß** die Temperatur des fluiden Mediums gesteuert und/oder geregelt wird.

17. Verfahren nach Anspruch 15 oder 16, **dadurch gekennzeichnet, daß** Pulver über die Zufuhr des fluiden Mediums befeuchtet oder chemisch behandelt wird.

18. Verfahren nach einem der Ansprüche 12 bis 17, **dadurch gekennzeichnet, daß** das Pulver in einem einem Beschichter (510) vorgeschalteten Befüllbehälter (513) fluidisiert wird.

19. Verfahren nach Anspruch 18, **dadurch gekennzeichnet, daß** das Pulver in den Beschichter dosiert abgegeben wird und die Fluidisierung vor der Dosierung erfolgt.

## Claims

1. A device for manufacturing a three-dimensional object comprising
a support (505), on which the object is built,
a coater (510) for applying layers of a powdery material, which can be solidified, onto the support or a previously solidified layer, wherein the coater can be filled with the powder to be applied,
a solidification means (540) for solidifying the powdery material at locations corresponding to the object in the respective layer,
**characterized by**
a device (1; 513) for fluidizing the powder before solidification,
comprising a storage container (1; 513) for the powder having a bottom (2; 514) and a sidewall (3; 515), wherein a chamber is provided in the container (1; 513), the chamber having at least in an area towards the inside of the container a boundary (4; 523) which is permeable for a fluid medium, and
comprising a device (9; 528) for supplying a fluid medium into the chamber.

2. The device according to claim 1, **characterized in that** the boundary is formed as a layer (4) extending substantially across the cross-section of the inside of the container in a distance from the bottom (2) from a material which is permeable by the fluid medium.

3. The device according to claim 1 or 2, **characterized in that** the boundary (4) is formed as a gas-permeable plate, in particular of sintered synthetic plastic material.

4. The device according to claim 1 or 2, **characterized in that** the boundary (523) is formed of a rolled wire mesh.

5. The device according to any one of claims 1 to 4, **characterized in that** the device for supplying a fluid medium is a device for supplying a gas.

6. The device according to any one of claims 1 to 5, **characterized in that** means for controlling and/or feedback-controlling the temperature and/or the pressure and/or the volume stream of the fluid medium is provided.

7. The device according to any one of claims 1 to 6, **characterized in that** an outlet (7; 526, 517) for the powder is provided, which extends vertically downwards.

8. The device according to claim 7, **characterized in that** the device for fluidizing is provided as a storage container (1) which is located outside of the device for manufacturing the object.

9. The device according to claim 7 or 8, **characterized in that** the device for fluidizing is formed as a filling container (513) which is provided inside the device for manufacturing the object and connected upstream of the coater (510).

10. The device according to claim 9, **characterized in that** the filling container (513) comprises an outlet opening (517) which is connected downstream of a metering means (518).

11. The device according to claim 9, **characterized in that** the device for fluidizing comprises a gas-permeable layer (523) which is arranged in a distance of the bottom of the filling container.

12. Method of manufacturing a three-dimensional object by use of a generative manufacturing method and by use of a device according to any one of claims 1 to 11, wherein the object is built by subsequently applying layers of a powdery material by means of a coater, which is filled with the powder, and by solidifying the layers at locations corresponding to the cross-section of the object,
**characterized in that** the powder is fluidized before solidification in a storage container (1; 513).

13. The method according to claim 12, **characterized in that** the powder is fluidized before the whole building process.

14. The method according to claim 12 or 13, **characterized in that** the powder is fluidized before applying a layer.

15. The method according to any one of claims 12 to 14, **characterized in that** the fluidizing is performed by supplying a fluid medium, preferably a gas, into the storage container (1; 513).

16. The method according to claim 15, **characterized in that** the temperature of the fluid medium is controlled and/or feedback-controlled.

17. The method according to claim 15 or 16, **characterized in that** the powder is moistened or chemically treated by the supply of the fluid medium.

18. The method according to any one of claims 12 to 17, **characterized in that** the powder is fluidized in a filling container (513), which is connected upstream of a coater (510).

19. The method according to claim 18, **characterized in that** the powder is discharged to the coater in a metered manner and the fluidizing is performed before metering.

## Revendications

1. Dispositif pour la fabrication d'un objet tridimensionnel comportant
un support (505) sur lequel l'objet est construit,
un applicateur (510) pour l'application de couches d'un matériau pulvérulent solidifiable sur le support ou sur une couche préalablement solidifiée, ledit applicateur pouvant être rempli de poudre à appliquer,
un dispositif de solidification (540) pour la solidification du matériau pulvérulent à des emplacements correspondant à l'objet dans chaque couche,
**caractérisé par** un dispositif (1 ; 513) pour la fluidification de la poudre avant solidification,
avec un réservoir de stockage (1 ; 513) pour la poudre avec un fond (2 ; 514) et une paroi latérale (3 ; 515), un compartiment étant prévu dans le réservoir (1 ; 513), lequel comporte dans au moins une partie située vers l'intérieur du réservoir une paroi (4 ; 523) perméable à un milieu fluide, et
avec un dispositif (9 ; 528) pour l'amenée d'un milieu fluide dans le compartiment.

2. Dispositif selon la revendication 1, **caractérisé en ce que** la paroi est formée comme une couche (4) s'étendant à intervalle du fond (2) sensiblement sur la section de l'intérieur du réservoir, et réalisée dans un matériau perméable au milieu fluide.

3. Dispositif selon la revendication 1 ou la revendication 2, **caractérisé en ce que** la paroi (4) est réalisée comme une plaque perméable aux gaz, de préférence dans une matière plastique frittée.

4. Dispositif selon la revendication 1 ou la revendication 2, **caractérisé en ce que** la paroi (523) est formée d'un treillis de fils métalliques laminés.

5. Dispositif selon l'une des revendications 1 à 4, **caractérisé en ce que** le dispositif pour l'amenée d'un milieu fluide est un dispositif pour l'amenée d'un gaz.

6. Dispositif selon l'une des revendications 1 à 5, **caractérisé en ce qu'**il est prévu un dispositif de commande et/ou de régulation de la température et/ou de la pression et/ou du débit volumique du milieu fluide.

7. Dispositif selon l'une des revendications 1 à 6, **caractérisé en ce qu'**il est prévu un conduit d'évacuation (7 ; 526, 517) s'étendant verticalement vers le bas pour la poudre.

8. Dispositif selon la revendication 7, **caractérisé en ce que** le dispositif de fluidification est prévu comme réservoir de stockage (1) situé à l'extérieur du dispositif de fabrication de l'objet.

9. Dispositif selon la revendication 7 ou la revendication 8, **caractérisé en ce que** le dispositif de fluidification est prévu à l'intérieur du dispositif de fabrication de l'objet, et est réalisé comme réservoir de remplissage (513) situé en amont de l'applicateur (510).

10. Dispositif selon la revendication 9, **caractérisé en ce que** le réservoir de remplissage (513) comporte un orifice de sortie (517) en aval duquel se trouve un dispositif de dosage (518).

11. Dispositif selon la revendication 9, **caractérisé en ce que** le dispositif de fluidification comprend une couche perméable aux gaz (523) disposée à intervalle du fond du réservoir de remplissage.

12. Procédé de fabrication d'un objet tridimensionnel au moyen d'un procédé de fabrication génératif et au moyen d'un dispositif selon l'une des revendications 1 à 11, où l'objet est construit par application de couches successives d'un matériau pulvérulent par un applicateur rempli de ladite poudre et solidification des couches à des emplacements correspondant à l'objet,
**caractérisé en ce que** la poudre est fluidifiée dans un réservoir de stockage (1 ; 513) avant solidification.

13. Procédé selon la revendication 12, **caractérisé en ce que** la poudre est fluidifiée avant tout le processus de construction.

14. Procédé selon la revendication 12 ou la revendication 13, **caractérisé en ce que** la poudre est fluidifiée avant l'application d'une couche.

15. Procédé selon l'une des revendications 12 à 14, **caractérisé en ce que** la fluidification est effectuée par amenée d'un milieu fluide, de préférence un gaz, dans le réservoir de stockage (1 ; 513).

16. Procédé selon la revendication 15, **caractérisé en ce que** la température du milieu fluide est commandée et/ou régulée.

17. Procédé selon la revendication 15 ou la revendication 16, **caractérisé en ce que** la poudre est humidifiée ou traitée chimiquement pendant l'amenée du milieu fluide.

18. Procédé selon l'une des revendications 12 à 17, **caractérisé en ce que** la poudre est fluidifiée dans un réservoir de remplissage (513) situé en amont d'un applicateur (510).

19. Procédé selon la revendication 18, **caractérisé en ce que** la poudre est déversée dans l'applicateur après dosage, et **en ce que** la fluidification est effectuée avant le dosage.
